# EUROPEAN PATENT APPLICATION

(11) **EP 4 043 622 A1**
(43) Date of publication of application: **17.08.2022**
(21) Application number: 20873862.5
(22) Date of filing: 07.10.2020
(51) Int. Cl.: D01F 8/14, D01D 5/34, D01F 1/07

(54) **THERMAL BONDING FIBER, AND FIBER ASSEMBLY FOR AUTOMOTIVE INTERIOR AND EXTERIOR MATERIALS, COMPRISING SAME**

(30) Priority: 07.10.2019 KR 20190124051
(71) Applicant: Toray Advanced Materials Korea Inc., Gumi-si, Gyeongsangbuk-do 39389 (KR)
(72) Inventor: LIM, Seong Su, Gumi-si, Gyeongsangbuk-do 39389 (KR)
(74) Representative: Dehns
(86) International application number: PCT/KR2020/013670
(87) International publication number: WO 2021/071250

(57) **Abstract**

The present invention relates to a thermal bonding fiber and, more specifically, to a thermal bonding fiber and a fiber assembly for automotive interior and exterior materials, comprising same, the thermal bonding fiber having a very remarkable feel, sound absorption coefficient, adhesive strength, flame retardancy and processability, having excellent heat resistance so as to exhibit minimized change with the passage of time, and exhibiting remarkably reduced VOC emission so as to be particularly suitable for automobiles in which a closed environment is implemented.

## Description

### [Cross-reference to related application]

This application claims priority to and the benefit of Korean Patent Application No. 10-2019-0124051, filed on October 07, 2019, the disclosure of which is incorporated herein by reference in its entirety.

### [Technical Field]

The present invention relates to a thermal bonding fiber and, more specifically, to a thermal bonding fiber and a fiber assembly for automotive interior and exterior materials, comprising same, the thermal bonding fiber having a very remarkable feel, sound absorption coefficient, adhesive strength, flame retardancy and processability, having excellent heat resistance so as to exhibit minimized change with the passage of time, and exhibiting remarkably reduced VOC emission so as to be particularly suitable for automobiles in which a closed environment is implemented.

### [Background Art]

In general, synthetic fibers have a high melting point, which limits their use in many cases. In particular, since when they are used as an adhesive to be press-attached by inserting it between fabrics on a tape or for a purpose such as a wicking in the application of bonding fibers, etc., the textile fabric itself may be deteriorated by heating and there is trouble in having to use special equipment such as high-frequency sewing machine, it is desired to easily bond by a simple ordinary hot press without using such special equipment.

Conventional low-melting polyester fibers have been widely used as hot-melt-type binder fibers for the purpose of bonding different types of fibers in mutual fiber structures used for manufacturing mattresses, automotive interior materials, or various non-woven paddings.

For example, U.S. Patent No. 4,129,675 introduces a low-melting polyester copolymerized using terephthalic acid (TPA) and isophthalic acid (IPA), and in addition, Korean Patent Registration No. 10-1216690 discloses a low-melting polyester fiber embodied including isophthalic acid and diethylene glycol to improve bonding property.

However, the conventional low-melting polyester fiber as described above may have spinnability and bonding property above a certain level, but due to the rigid ring structure of the modifier, there is a problem in obtaining a nonwoven fabric or woven structure having a hard feeling after thermal bonding.

In addition, as development progresses in the direction of having a low melting point or low glass transition temperature for the expression of binder properties, there are problems in that the heat resistance of the embodied polyester becomes poor, and so a change with the passage of time occurs remarkably even under storage conditions exceeding 40 °C in summer, and storage stability is also significantly reduced due to bonding between polyester fibers occurring during storage. In particular, the indoor temperature of a car parked outdoors in summer may rise to 60 °C or higher, and under these conditions, when polyester fibers with poor heat resistance are used, a change with the passage of time of the embodied interior materials may also be a problem. In addition, as the exterior materials of automobiles are continuously exposed to high temperatures near the engine room or to high-temperature outdoor temperatures in summer, heat resistance issues such as a change with the passage of time of exterior materials are very sensitive issues in their application.

Meanwhile, automobiles are generally operated in a sealed state from the outside, and in particular, in recent years, there is a trend of increasing driving in a more sealed state due to the influence of fine dust and the like. Accordingly, the quality of the air in the interior space of a car is important, and there is a report on the emission of volatile organic compounds (VOCs) from interior materials installed in the interior space, and the problem of harming the health of passengers due to the released volatile organic compounds is emerging.

Therefore, there is an urgent need to develop an automotive interior material in which the feel, sound absorption coefficient, adhesive strength, flame retardancy and processability are improved, a change with the passage of time is minimized, and the emission of VOCs is significantly reduced.

The above information disclosed in this Background section is only for enhancement of understanding of the background of the invention and it may therefore contain information that does not form the prior art that is already known to a person of ordinary skill in the art.

### [Disclosure of Invention]

### [Technical Problem]

The present invention has been devised in view of the above points, and is directed to providing a thermal bonding fiber and a fiber assembly for automotive interior and exterior materials, comprising same, the thermal bonding fiber having a very remarkable feel, sound absorption coefficient, adhesive strength, flame retardancy and processability, having excellent heat resistance so as to exhibit minimized change with the passage of time, exhibiting remarkably reduced VOC emission so as to be particularly suitable for automobiles in which a closed environment is implemented, and capable of being applied as a subsidiary material around an automobile engine room where a high-temperature environment is created.

### [Technical Solution]

Various aspects of the present invention are directed to providing a thermal bonding fiber, including: a core portion containing a polyester-based component and a phosphorus-based flame retardant; and a sheath portion containing a copolyester obtained by polycondensation of an acid component containing terephthalic acid and an esterified compound produced by the reaction of ethylene glycol with a diol component containing a compound represented by Formula 1 and a compound represented by Formula 2 below are reacted, and surrounding the core portion.

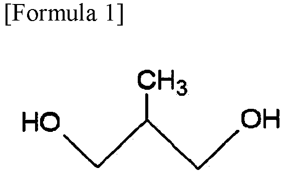

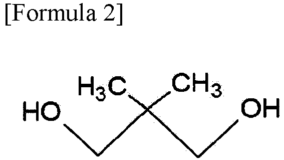

According to an embodiment of the present invention, the total content of the compound represented by Formula 1 and the compound represented by Formula 2 may be contained in an amount of 30 to 45 mol% of the diol component.

In addition, in the diol component, the compound represented by Formula 1 may be contained in a larger content (mol%) than the compound represented by Formula 2.

In addition, the diol component may not contain diethylene glycol.

In addition, in the acid component, isophthalic acid may be further included in an amount of 1 to 10 mol% based on the acid content.

In addition, in the diol component, the compound represented by Formula 1 may be included in an amount of 1 to 40 mol% and the compound represented by Formula 2 may be included in an amount of 0.8 to 20 mol%, and preferably, in the diol component, the compound represented by Formula 1 may be included in an amount of 20 to 40 mol% and the compound represented by Formula 2 may be included in an amount of 0.8 to 10 mol%, and more preferably, the compound represented by Formula 1 may be included in an amount of 30 to 40 mol% and the compound represented by Formula 2 may be included in an amount of 0.8 to 6 mol%.

In addition, the copolyester may have a glass transition temperature of 60 to 75 °C, more preferably 65 to 72 °C.

In addition, the copolyester may have an intrinsic viscosity of 0.500 to 0.800 dl/g.

In addition, the core portion may include a phosphorus-based flame retardant represented by Formula 3 below in an amount of 5500 ppm to 6500 ppm based on the phosphorus content.

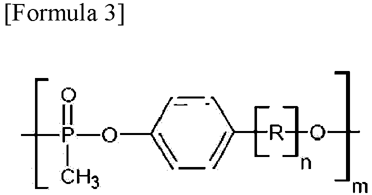

In this case, in Formula 3, R is an alkylene group having 1 to 5 carbons, n is an integer of 1 to 20, and m is an integer of 1 to 80.

In addition, the sheath portion may further include a phosphorus-based flame retardant represented by Formula 3.

In addition, the present invention provides a fiber assembly for automotive interior and exterior materials, including: a thermal bonding fiber according to the present invention, and a polyester-based support fiber having a melting point higher than 250 °C.

According to an embodiment of the present invention, the thermal bonding fiber and the support fiber may be included in a weight ratio of 70:30 to 30:70.

In addition, as the following conditions (1) to (3), conditions (1) 0 to 15 cm of carbonization distance, (2) 1600 ppb or less amount of acetaldehyde (AA) generation in accordance with the MS 300-55 method in the only thermal bonding fiber, and (3) 20 mm or less high-temperature sagging may be satisfied.

In addition, the present invention provides an automotive interior and exterior material containing a fiber assembly for automotive interior and exterior materials.

### [Advantageous Effects]

The fiber assembly prepared using the thermal bonding fiber according to the present invention has very excellent feel, sound absorption coefficient, flame retardancy, adhesive strength and processability. In addition, as a change with the passage of time is minimized due to its excellent heat resistance, it is very suitable for use as an automotive interior material where a high indoor temperature is formed during outdoor parking in summer, or for use as an automotive exterior material where a high-temperature environment is created around the engine room. Furthermore, since the emission of VOCs is significantly reduced, it can be widely applied in related fields as it is very suitable for automotive interior materials, which are increasingly operated in a closed environment.

### [Brief Description of Drawings]

The above and other aspects, features, and advantages of the present invention will become more apparent to those of ordinary skill in the art by describing embodiments thereof in detail with reference to the accompanying drawings, in which:

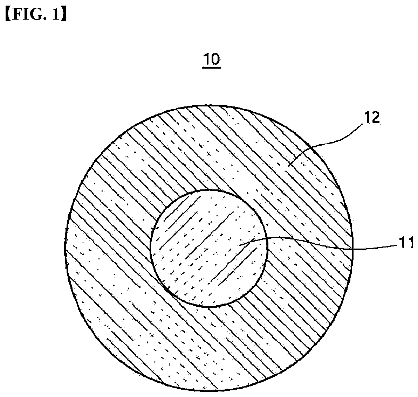

FIG. 1 is a cross-sectional mimetic diagram of a thermal bonding fiber included in an exemplary embodiment of the present invention.

### [Best Mode for Carrying Out the Invention]

Hereinafter, exemplary embodiments of the present invention will be described in detail so that those of ordinary skill in the art can readily implement the present invention. The present invention may be embodied in many different forms and is not limited to the embodiments set forth herein.

Referring to FIG. 1, the thermal bonding fiber 10 according to the present invention includes a core portion 11 and a sheath portion 12 surrounding the core portion 11.

First, the sheath portion 12 is described, wherein the sheath portion 12 includes a copolyester obtained by polycondensation of an acid component containing terephthalic acid and an esterified compound produced by the reaction of ethylene glycol with a diol component comprising a compound represented by Formula 1 and a compound represented by Formula 2 below are reacted.

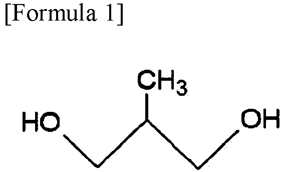

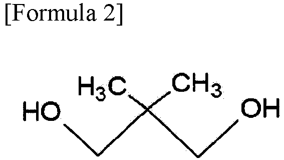

First, the acid component includes terephthalic acid, and other than terephthalic acid, may further include an aromatic polyhydric carboxylic acid having 6 to 14 carbons, an aliphatic polyhydric carboxylic acid having 2 to 14 carbons, and/or a sulfonic acid metal salt.

The aromatic polyhydric carboxylic acid having 6 to 14 carbons may use, without limitation, those known as acid components used for the production of polyester, may preferably be any one or more selected from the group consisting of dimethyl terephthalate, isophthalic acid and dimethyl isophthalate, and may more preferably be isophthalic acid in terms of reaction stability with terephthalic acid, ease of handling, and economic feasibility.

In addition, the aliphatic polyhydric carboxylic acid having 2 to 14 carbons may use, without limitation, those known as acid components used for the production of polyester, and non-limiting examples thereof may include any one or more selected from the group consisting of oxalic acid, malonic acid, succinic acid, glutaric acid, adipic acid, suberic acid, citric acid, pimeric acid, azelaic acid, sebacic acid, nonanoic acid, decanoic acid, dodecanoic acid and hexadecanoic acid.

In addition, the sulfonic acid metal salt may be sodium 3,5-dicarbomethoxybenzene sulfonate.

Meanwhile, as the acid component, other components that may be included in addition to terephthalic acid may decrease the heat resistance of the copolyester, so it is preferably not included. In particular, when an acid component such as isophthalic acid or dimethyl isophthalate is further included, the content of VOCs generated in the polycondensation process of the copolyester, for example, the content of acetaldehyde may increase, whereas since the melting point of the copolyester is further lowered and it is difficult to vaporize and remove the acetaldehyde generated in the polymerization process through a subsequent process such as heat treatment, the resulting fiber may have a high content of acetaldehyde. Accordingly, when isophthalic acid is further included, it may be provided in an amount of 1 to 10 mol% based on the acid component, and when it is provided in excess of 10 mol%, there is a risk that the acetaldehyde content is excessively increased, and the thermal bonding fiber implemented in this way may not be suitable for use in automotive interior materials.

Next, the diol component includes ethylene glycol and a compound represented by Formula 1 and a compound represented by the Formula 2 below.

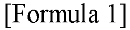

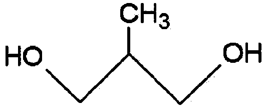

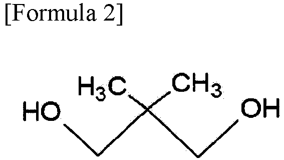

First, the compound represented by Formula 1 may lower the degree of crystallinity and the glass transition temperature of the copolyester to exhibit excellent thermal bonding performance. In addition, it makes a dyeing process easier by enabling dyeing under normal pressure conditions in the dyeing process after being manufactured in a fibrous form, and because of its excellent dyeing properties, the color fastness to washing is improved, and the feel of the fiber assembly can be improved. The compound represented by Formula 1 in the diol component may be contained in an amount of preferably 20 to 40 mol%, more preferably 30 to 40 mol%. In particular, there are advantages in that when 20 mol% or more of the compound represented by Formula 1 is provided, the copolyester embodied together with the compound represented by Formula 2 to be described below may further increase and improve thermal bonding properties at low temperatures, and when copolyester is manufactured into chips, the drying time may be significantly shortened, and it is possible to express a synergistic effect on reducing the content of VOCs emitted from the thermal bonding fiber.

If the compound represented by Formula 1 is contained in an amount of less than 20 mol% based on the diol component, the spinnability is excellent, but there is a concern that the bondable temperature may be increased, or the thermal bonding property may be lowered, and the use may be limited. In addition, there is a concern that the content of VOCs emitted from the embodied thermal bonding fiber increases. In addition, if the compound represented by Formula 1 is provided in excess of 40 mol%, there may be a problem that commercialization is difficult due to poor spinnability into the thermal bonding fiber, and rather, there is a risk that the thermal bonding property may be deteriorated due to the increase in crystallinity.

The compound represented by Formula 2 further improves the thermal bonding property of the copolyester prepared together with the compound represented by Formula 1, and also prevents the glass transition temperature of the compound represented by Formula 1 from significantly lowering, thereby enabling to express excellent thermal property. For example, despite the storage temperature of 40°C or higher and the indoor temperature of a vehicle rising to 60°C or higher in summer, it minimizes a change with the passage of time, can be used as an exterior material for parts where a high-temperature environment such as an engine room is created, and can improve storage stability. With respect to thermal bonding property, the compound represented by Formula 2 may express an appropriate shrinkage property to the thermal bonding fiber produced using copolyester embodied by mixing with the compound represented by Formula 1, and due to the expression of this property, may express higher thermal bonding property by further increasing point adhesion upon thermal bonding.

The compound represented by Formula 2 in the diol component may be contained in an amount of preferably 0.8 to 10 mol%, more preferably 0.8 to 6 mol%.

If the compound represented by Formula 2 is contained in an amount of less than 0.8 mol% based on the diol component, it is difficult to improve the desired heat resistance, so storage stability is not good, and there is a concern that a change with the passage of time may be very large. In addition, there is a concern that the content of VOCs emitted from the embodied thermal bonding fiber increases.

In addition, if the compound represented by Formula 2 is contained in excess of 10 mol%, considering that it is used together with the compound represented by Formula 1 described above, there may be a problem in that it is difficult to commercialize due to poor spinnability to the thermal bonding fiber. In addition, in some cases, if isophthalic acid is additionally included as an acid component, the crystallinity is sufficiently lowered, so that the improvement in bonding property is insignificant, and if the content of isophthalic acid to be added increases, crystallinity is rather increased, and there is a concern that the object of the invention may not be achieved, such as excellent thermal bonding property at a desired temperature may be significantly reduced. In addition, when implemented in a fibrous form, the contractility is significantly expressed, so there is a difficulty in processing it into a fiber assembly or interior and exterior materials.

According to a preferred embodiment of the present invention, the total content of the compound represented by Formula 1 and the compound represented by Formula 2 may be preferably included in an amount of 30 to 45 mol% of the diol component, and more preferably 33 to 41 mol%. If they are included in less than 30 mol%, the crystallinity of the copolyester increases and a high melting point is expressed or it becomes difficult to implement a softening point at a low temperature, so that the thermal bonding temperature may be remarkably high, and excellent thermal bonding property may not be expressed at a low temperature. In addition, there is a concern that the content of VOCs emitted from the embodied thermal bonding fiber increases.

In addition, if the compound represented by Formula 2 is included in excess of 45 mol%, there is a concern about a significant decrease in polymerization reactivity and spinnability, and the crystallinity of the prepared copolyester is rather increased, so it may be difficult to express high thermal bonding property at a desired temperature.

In this case, in the diol component, the compound represented by Formula 1 may be included in a larger content (mol%) than the compound represented by Formula 2. If the compound represented by Formula 1 is included in an amount less than or equal to that of the compound represented by Formula 2, it is difficult to express the desired thermal bonding property, and as it has to be bonded at a high temperature, there may be restrictions on the use of the developed product. In addition, there is a concern that it may be difficult to process or utilize as the developed product, for example, automotive interior and exterior materials due to the expression of excessive shrinkage characteristics.

Meanwhile, the diol component may further include other type of diol component in addition to the compound represented by Formula 1, the compound represented by Formula 2, and ethylene glycol.

Since the other type of diol component may be a known diol component used in the production of polyester, the present invention is not particularly limited thereto, but as a non-limiting example thereof, it may be an aliphatic diol component having 2 to 14 carbons, and specifically may be any one or more selected from the group consisting of 1,3-propanediol, 1,4-butanediol, 1,6-hexanediol, propylene glycol, trimethyl glycol, tetramethylene glycol, pentamethyl glycol, hexamethylene glycol, heptamethylene glycol, octamethylene glycol, nonamethylene glycol, decamethylene glycol, undecamethylene glycol, dodecamethylene glycol and tridecamethylene glycol.

However, in order to combine heat resistance with a desired level of thermal bonding properties, it is preferable not to further include the other type of diol component, and in particular, diethylene glycol may not be included in the diol component. If diethylene glycol is included in the diol component, it may cause a rapid decrease in the glass transition temperature, so that even when the compound represented by Formula 2 is included, the desired level of heat resistance may not be achieved. In addition, there is a concern that the content of VOCs emitted during use will greatly increase. Meanwhile, that diethylene glycol is not included in the diol component means that diethylene glycol is not intentionally added as a monomer for the production of copolyester, but it does not mean that diethylene glycol generated as a by-product in the esterification reaction of the acid component and the diol component and the polycondensation reaction is not included. Since diethylene glycol can occur naturally as a by-product, according to an embodiment of the present invention, diethylene glycol generated as a by-product may be included in the sheath portion formed including the copolyester, and the content of diethylene glycol included may be less than 4% by weight based on the weight of the copolyester chip or the sheath portion made of the copolyester alone. Meanwhile, if the content of diethylene glycol generated as a by-product exceeds an appropriate level, the pack pressure increases when spinning into fibers, and spinnability may be significantly lowered by inducing frequent thread cutting, and there is a concern that the content of emitted VOCs, particularly the amount of acetaldehyde, may significantly increase.

The above-mentioned acid component and diol component can be prepared as copolyester through esterification reaction and polycondensation using known synthesis conditions in the field of polyester synthesis. In this case, the acid component and the diol component may be added to react in a molar ratio of 1: 1.0 to 5.0, preferably 1: 1.0 to 2.0, but is not limited thereto. In the above molar ratio, if the diol component is less than 1 times based on the acid component, the acidity during polymerization may be excessively high, thereby promoting side reactions, and in the above molar ratio if the diol component exceeds 5 times based on the acid component, the polymerization degree may not increase.

Meanwhile, the acid component and the diol component may be mixed at a time in an appropriate molar ratio as described above, and then subjected to an esterification reaction and polycondensation to produce copolyester, or among the acid component and the diol component, the compound represented by Formula 2 may be added during the esterification reaction between ethylene glycol and the compound represented by Formula 1 to undergo esterification reaction and polycondensation to produce copolyester, but the present invention is not limited thereto.

A catalyst may be further included in the esterification reaction. The catalyst may be a catalyst typically used in the production of polyester, and as a non-limiting example thereof, it may be prepared under a metal acetate catalyst.

In addition, the esterification reaction may be preferably carried out at a temperature of 200 to 270 °C and a pressure of 1100 to 1350 Torr. If the above conditions are not satisfied, a problem may occur in that an esterification compound suitable for a polycondensation reaction cannot be formed due to a prolonged esterification reaction time or reduced reactivity.

In addition, the polycondensation reaction may be carried out at a temperature of 250 to 300 °C and a pressure of 0.3 to 1.0 Torr, and if the above conditions are not satisfied, there may be problems such as a reaction time delay, a decrease in polymerization degree, and induction of thermal decomposition. In addition, the polycondensation reaction may vary depending on the reaction conditions, for example, may be carried out for 150 to 240 minutes.

In this case, a catalyst may be further included in the polycondensation reaction. The catalyst may be used without limitation in the case of a known catalyst used for producing a polyester resin. However, preferably, it may be a titanium-based polymerization catalyst, and more specifically, may be a titanium-based polymerization catalyst represented by the following Formula 4.

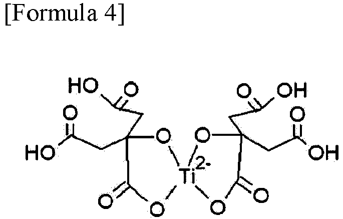

The titanium-based polymerization catalyst represented by Formula 4 is stable even in the presence of water molecules. For this reason, as it does not deactivate even if it is added before the esterification reaction in which a lot of water is produced as a by-product, an esterification reaction and a polycondensation reaction may proceed within a shorter time than in the prior art, thereby suppressing coloring caused by yellowing. The catalyst may be included so as to be 5 to 40 ppm in terms of titanium atoms based on the total weight of the obtained copolyester, and thereby, the thermal stability and color tone of copolyester become more favorable, and it is preferable. If it is provided at less than 5 ppm in terms of titanium atoms, it may be difficult to properly promote the esterification reaction, and if it is provided in excess of 40 ppm, there may be a problem in that the reactivity is promoted but coloring occurs.

In this case, a thermal stabilizer may be further included in the polycondensation reaction. The thermal stabilizer is to prevent discoloration of color through thermal decomposition at high temperature, and a phosphorus-based compound may be used. The phosphorus compound is preferably phosphoric acid, monomethyl phosphoric acid, trimethyl phosphoric acid, triethyl phosphoric acid, etc. and derivatives thereof, for example, and among these, trimethyl phosphoric acid or triethyl phosphoric acid is particularly preferable because of its excellent effect. The amount of the phosphorus compound used is preferably 10 to 30 ppm in terms of phosphorus atoms based on the total weight of the finally obtained copolyester. If the phosphorus-based thermal stabilizer is used at less than 10 ppm, it is difficult to prevent thermal decomposition at high temperature, so the copolyester may be discolored, and if it exceeds 30 ppm, it may be disadvantageous in terms of manufacturing cost, and there may be a problem in that a reaction delay phenomenon occurs due to inhibition of catalytic activity by the thermal stabilizer during polycondensation reaction.

In addition, the copolyester may further include a complementary colorant. The complementary colorant is for adjusting the color tone to make the color of the dye dyed in the dyeing process proceeding after being spun into the fiber stronger and better, and what is known in the field of textiles may be added, and non-limiting examples thereof include wear dyes, pigments, vat dyes, disperse dyes, organic pigments, and the like. However, preferably, a mixture of blue and red dyes may be used. This is because a cobalt compound, which is generally used as a complementary colorant, is not preferable because it is harmful to the human body, whereas a complementary colorant in which blue and red dyes are mixed is preferable because it is harmless to the human body. In addition, when a mixture of blue and red dyes is used, there is an advantage in that the color tone can be finely controlled. The blue dye may include, for example, solvent blue 104, solvent blue 122, and solvent blue 45, and the red dye may include, for example, solvent red 111, solvent red 179, and solvent red 195. In addition, the blue dye and the red dye can be mixed in a weight ratio of 1: 1.0 to 3.0, which is advantageous to express a remarkable effect in a desired fine color tone control.

The complementary colorant may be provided in an amount of 1 to 10 ppm based on the total weight of the copolyester, and if it is provided at less than 1 ppm, it may be difficult to achieve a desired level of complementary color characteristics, and if it exceeds 10 ppm, there may be a problem in that the L value decreases and the transparency is lowered and the color is dark.

The copolyester produced by the above-described method may have an intrinsic viscosity of 0.5 to 0.8 dl/g. If the intrinsic viscosity is less than 0.5dl/g, it may not be easy to form a cross-section after spinning into a fiber, and if the intrinsic viscosity exceeds 0.8 dl/g, the pack pressure is high, and there is a concern that the spinnability may be lowered.

In addition, the copolyester may have a glass transition temperature of 60 to 75 °C, through which it may be more advantageous to achieve the object of the present invention. If the glass transition temperature is less than 60 °C, the thermal bonding fiber embodied with copolyester or the embodied article including the same may have a large change with the passage of time even in temperature conditions exceeding 40 °C, such as in summer, and in particular, when considering the indoor temperature of a vehicle in summer or the temperature in the vicinity of a high-temperature engine room, the change with the passage of time may significantly increase. In addition, when the thermal bonding fiber is produced, the occurrence of bonds between the copolyester chips increases, which may cause spinning defects. Furthermore, there is a concern that the shrinkage characteristic is excessively expressed after being embodied as fibers, etc., and the bonding characteristic is rather deteriorated. In addition, due to the limitations of heat treatment required for the drying process after chip formation, the post-processing process after spinning into fibers, etc., there may be a problem in that the processing time is prolonged or the process cannot be smoothly performed.

In addition, if the glass transition temperature exceeds 75 °C, there is a concern that the thermal bonding properties may be significantly lowered, and there is a concern that the performing temperature of the bonding process may be limited to a high temperature.

Meanwhile, the sheath portion 12 described above may include a phosphorus-based flame retardant in order to increase the flame retardancy. Any known phosphorus-based flame retardant provided in the fiber may be used without limitation as the phosphorus-based flame retardant. Preferably, the phosphorus-based flame retardant may include a compound represented by Formula 3 to be described later. Alternatively, if the phosphorus-based flame retardant is included in the above-described sheath portion 12, the melting point of the sheath portion increases and, thereby, there is a concern that the adhesive strength may be somewhat lowered. In particular, in the case of the compound represented by Formula 2, the increase in melting point due to the inclusion of the phosphorus-based flame retardant may be large compared to other types of modified monomers, and thus there is a concern that the adhesive strength may be lowered. Accordingly, according to another embodiment of the present invention, the sheath portion 12 may not include a phosphorus-based flame retardant. Here, not including the phosphorus-based flame retardant means not including the phosphorus-based flame retardant as a component bonded to the main chain or side chain in the copolyester copolymer provided in the sheath portion and/or as a component included in the sheath portion together with the copolyester.

Meanwhile, if the compound represented by Formula 3 below is included in the sheath portion 12, it may be provided in an amount of 5500 ppm to 6500 ppm based on the phosphorus content. If the compound is provided at less than 5500 ppm based on the phosphorus content, it may be difficult to achieve sufficient flame retardancy to a desired level. In addition, if the compound is provided in excess of 6500 ppm based on the phosphorus content, the degree of improvement in flame retardancy may be insignificant, whereas there is a concern that the spinnability may be lowered, the melting point may be increased, and thus mechanical properties such as a decrease in adhesive strength and the strength of thermal bonding fibers may be significantly reduced.

Next, the core portion 11 includes a polyester-based component and a phosphorus-based flame retardant. The polyester-based component is not limited, in the case of a polyester-based component having a melting point or softening point higher than the melting point or softening point of the copolyester provided in the sheath portion 12 described above, and may be, for example, polyethylene terephthalate.

In addition, any known phosphorus-based flame retardant that is mixed with a high molecular compound to improve flame retardant characteristics may be used without limitation as the phosphorus-based flame retardant. Preferably, the phosphorus-based flame retardant may include a compound represented by Formula 3 below, thereby preventing deterioration of fiber physical properties due to hydrolysis of the flame retardant during processing.

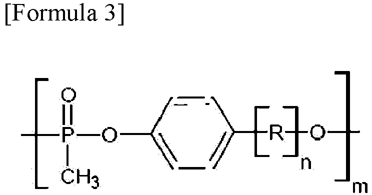

In this case, in Formula 3, R is an alkylene group having 1 to 5 carbons, preferably an alkylene group having 2 to 4 carbons. And, n is an integer of 1 to 20, preferably an integer of 5 to 10. And, m is an integer of 1 to 80, preferably an integer of 20 to 40.

The compound represented by Formula 3 may be provided in the core portion 11 in an amount of 5500 ppm to 6500 ppm based on the phosphorus content. If the compound is provided at less than 5500 ppm based on the phosphorus content, it may be difficult to achieve sufficient flame retardancy to a desired level. In addition, if the compound is provided in excess of 6500 ppm based on the phosphorus content, the degree of improvement in flame retardancy may be insignificant, whereas there is a concern that the spinnability may be lowered, and mechanical properties such as the strength of thermal bonding fibers may be significantly reduced.

The thermal bonding fiber may be, for example, a composite spinning of a core portion and a sheath portion in a weight ratio of 8:2 to 2:8, but is not limited thereto, and may be spun by appropriately adjusting the ratio according to the purpose. Spinning conditions, spinning apparatuses and processes of cooling and stretching of the composite fiber after spinning for the thermal bonding fiber may be performed through known conditions, apparatuses and processes in the art or by appropriately modifying them, so that the present invention is not particularly limited thereto. In addition, as an example, the thermal bonding fiber may be spun at a spinning temperature of 270 to 290 °C, and may be stretched 2.5 to 4.0 times after spinning.

The thermal bonding fiber according to an embodiment of the present invention implemented by the above-described manufacturing method can implement a fiber assembly for automotive interior and exterior materials alone. However, preferably, it is possible to implement a fiber assembly for automotive interior and exterior materials together with polyester-based support fibers.

The thermal bonding fiber serves to attach between the polyester-based support fibers through thermal fusion, and itself may be used as a fiber that guarantees the shape realization and mechanical strength of the fiber assembly.

The thermal bonding fiber may be appropriately selected in fineness or fiber length in consideration of the physical properties of the implemented fiber assembly, and for example, the fineness may be 1 to 15 deniers, and the fiber length may be, for example, 1 to 100 mm.

In addition, the support fiber is implemented by including a polyester-based component for compatibility with the thermal bonding fiber, and serves to guarantee the mechanical strength, shape maintenance, and heat resistance of the fiber assembly. To this end, the polyester-based component may be a component having a melting point higher than 250 °C, and through this, it may be more advantageous to achieve the object of the present invention.

The support fiber may have, for example, a fineness of 2 to 15 deniers, and a fiber length of 10 to 80 mm, but is not limited thereto.

In addition, any known polyester-based component having a melting point of more than 250 °C may be used without limitation as the support fiber, and it may be, for example, polyethylene terephthalate.

The above-described thermal bonding fiber and support fiber may form a fiber assembly in a weight ratio of 30:70 to 70:30. If the support fiber is provided with a greater weight than the thermal bonding fiber out of the weight ratio, the bonding strength of the fiber assembly may decrease. In addition, if the support fiber is provided with a smaller weight than the thermal bonding fiber out of the above weight ratio, there is a concern that the sound absorption coefficient, feel, and shape stability of the fiber assembly may be remarkably deteriorated, and workability such as initial openability or carding performance may be significantly reduced.

The fiber assembly including the thermal bonding fiber and the support fiber may be in the form of a known fabric, for example, a woven fabric, a knitted fabric or a nonwoven fabric, and may be, for example, a nonwoven fabric having no directionality based on the fiber length direction. The nonwoven fabric may be manufactured through a known dry or wet nonwoven fabric manufacturing method, and the present invention is not particularly limited thereto.

For example, the thermal bonding fiber and the support fiber may be manufactured as short fibers having a predetermined length, and then the short fibers may be mixed and opened and then heat-treated to be implemented as a fiber assembly. The heat treatment may be 100 to 180 °C, more preferably 120 to 180 °C, through this, it is possible to express more improved bonding property.

The fiber assembly for automotive interior and exterior materials according to an embodiment of the present invention may satisfy conditions (1) to (3) below.

First, as condition (1), a carbonization distance of the fiber assembly may be 0 to 15 cm. Through this, excellent flame retardancy can be expressed. If the carbonization distance exceeds 15 cm, it may be difficult to use as an exterior material around the high temperature engine room, and there may be a problem of the fire spreading to the inside in case of a fire. In this case, the carbonization distance was evaluated for a fiber assembly specimen having a basis weight of 1250 g/m² and 100 mm × 20 mm × 10 mm in width, length and thickness, respectively, which was produced by mixing and opening the thermal bonding fiber (fiber length 51 mm, fineness 4.0 de) and polyethylene terephthalate (PET) short fiber (fiber length 51 mm, fineness 7.0 de) at 5:5 weight ratio, and then heat-treating it under the conditions of 180 °C and 15 minutes.

Next, as condition (2), the thermal bonding fiber provided in the fiber assembly may have an amount of acetaldehyde (AA) generation in accordance with the MS 300-55 method of 2400 ppb or less, more preferably 1950 ppb or less, and even more preferably 1600 ppb or less, and through this, the amount of generation of harmful components to the human body in a closed environment such as the inside of a vehicle is significantly less, so there is an advantage in that it can be very useful as an automotive interior material for a vehicle, and the smell of interior material can be reduced.

Next, as condition (3), the high-temperature sagging measured by the following measurement method may be 20 mm or less, and through this, there are advantages in that it is possible to minimize deformation of the shape even when used close to a high-temperature heat source, and deformation of the shape can be prevented even in a high-temperature environment in summer. In this case, the high-temperature sagging was measured by exposing a fiber assembly specimen to an environment of 90 °C for 2 hours, then fixing opposite ends in the longitudinal direction of the specimen, and then measuring the sagging width of the sagging portion, wherein the fiber assembly specimen has a basis weight of 330 g/m² and 100 mm × 20 mm × 10 mm in width, length and thickness, respectively, which was produced by mixing and opening the thermal bonding fiber (fiber length 51 mm, fineness 4.0 de) and polyethylene terephthalate (PET) short fiber (fiber length 51 mm, fineness 7.0 de) at 5:5 weight ratio, and then heat-treating it under the conditions of 180 °C and 15 minutes. In this case, the sagging width was measured based on the lower surfaces of the opposite ends, and the maximum value was set as the high-temperature sagging value.

In addition, as condition 4, the after-flame time of the fiber assembly may be less than 3.0 seconds, and through this, excellent flame retardancy can be expressed. If the after-flame time exceeds 3.0 seconds, it may be difficult to use as an exterior material around the high temperature engine room, and there may be a problem of the fire spreading to the inside in case of a fire.

Meanwhile, the aforementioned fiber assembly for automotive interior and exterior materials may be implemented as automotive interior and exterior materials by further including a single or PET-only fiber assembly, etc. The automotive interior and exterior material may be a known type of interior and exterior material, and preferably, may be particularly suitable for the undercover for protecting the lower part of the vehicle, for example, an engine or a transmission, in consideration of excellent sound absorption coefficient, adhesive strength, flame retardancy, heat resistance and low VOCs emission.

### [Mode for Carrying Out the Invention]

The present invention will be described in more detail through the following examples, but the following examples are not intended to limit the scope of the present invention, which should be construed to aid understanding of the present invention.

### <Example 1>

38 mol% of the compound represented by Formula 1 and 3 mol% of the compound represented by the following Formula 2 below as a diol component, and 59 mol% of ethylene glycol as the remaining diol component were added, and 100 mol% of terephthalic acid as an acid component was added, in which the acid component and the diol component were subjected to an esterification reaction at a ratio of 1:1.2 at 250 °C under a pressure of 1140 torr to obtain an ester reaction product, and the reaction rate was 97.5%. The formed ester reaction product was transferred to a polycondensation reactor, 15 ppm of the compound represented by the following Formula 4 (based on Ti element) as a polycondensation catalyst and 25 ppm of triethyl phosphoric acid (based on P element) as a thermal stabilizer were added, and they were heated to 285 °C while gradually reducing the pressure to a final pressure of 0.5 Torr to carry out a polycondensation reaction to prepare a copolyester, and then the copolyester was prepared as a polyester chip having a width, length, and height of 2 mm × 4 mm × 3 mm, respectively, in a conventional method.

Then, in order to prepare a core-sheath type composite fiber using the copolyester as a sheath portion and polyethylene terephthalate (PET) having an intrinsic viscosity of 0.65 dl/g as a core portion, the copolyester chip, the PET chip, and the phosphorus-based flame retardant represented by the following Formula 3 were each put into a hopper, melted, and then put into a core-sheath spinneret, respectively, and then they were compound-spun at a spinning speed of 1000 mpm at 275 °C so that the core portion and the sheath portion had a 5:5 weight ratio and stretched 3.0 times to prepare a core-sheath type thermal bonding fiber having a fiber length of 51 mm and a fineness of 4.0 de as shown in Table 1. In this case, the content of the phosphorus-based flame retardant contained in the core portion was 5700 ppm based on the phosphorus content.

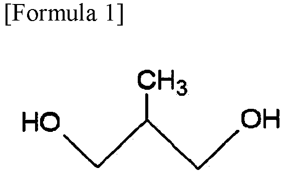

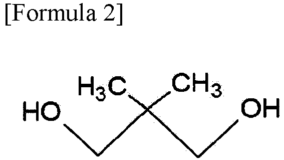

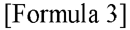

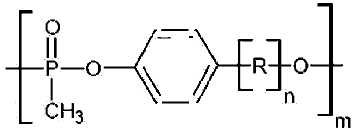

In this case, in Formula 3, R is a linear alkylene group having 3 carbons, n is an integer of 10, and m is an integer of 40.

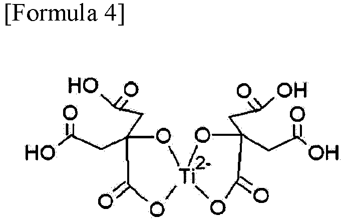

### <Examples 2 to 14>

It was prepared in the same manner as in Example 1, but by changing the composition ratio of the monomer for preparing the copolyester as shown in Table 1, Table 2 or Table 3 below, a thermal bonding fiber, which is a core-sheath type composite fiber as shown in Table 1, Table 2 or Table 3 below, was prepared.

### <Comparative Examples 1 to 4>

It was prepared in the same manner as in Example 1, but by changing the composition of the monomer for preparing the copolyester as shown in Table 3 below, a polyester chip and a thermal bonding fiber, which is a core-sheath type composite fiber, using the same as shown in Table 3 below were prepared.

### <Experimental Example 1>

The following physical properties were evaluated for the copolyester chip, which is an intermediate, the thermal bonding fiber, or the fiber assembly produced using the same, during the preparation of the thermal bonding fiber implemented according to the Examples and Comparative Examples, and the results are shown in Table 1 to Table 3 below.

In this case, evaluated were a total of three types of fiber assemblies having a basis weight of 35 g/m² prepared by mixing and opening the thermal bonding fiber and polyethylene terephthalate (PET) short fiber (fiber length 51 mm, fineness 4.0 de) at 5:5 weight ratio, and then heat-treating it under the conditions of 120 °C, 140 °C, and 160 °C, respectively.

### 1. Intrinsic viscosity

The copolyester chip was melted at 110 °C, at a concentration of 2.0g/25ml for 30 minutes using Ortho-Chloro Phenol as a solvent, and then kept at 25 °C for 30 minutes, and it was analyzed from an automatic viscometer connected to a CANON viscometer.

### 2. Glass transition temperature, melting point

The glass transition temperature and melting point of the copolyester were measured using a differential calorimeter, and the analysis condition was a temperature increase rate of 20 °C/min.

### 3. Drying time of copolyester chip

A polycondensed copolyester resin was chipped, and then it was measured for moisture ratio in a vacuum dryer at 55 °C at 4 hour intervals, and as a result of the measurement, when the moisture ratio was measured to be less than 100 ppm, the time was expressed as the drying time.

### 4. Storage stability of short fiber

For 500 g of the prepared core-sheath type composite fiber, pressure of 2 kgf/cm² was applied in a chamber with a temperature of 40 °C and a relative humidity of 45% and left for 3 days, and 10 experts visually observed the fusion state between the fibers, and as a result, after evaluation on a scale of 0 to 10 points based on the case where fusion did not occur was scored as 10 points, and the case where all fusions occurred was scored as 0 points, the average value was calculated. As a result, when the average value was 9.0 or more, it was indicated as very excellent (⊚), when it was 7.0 or more and less than 9.0, it was indicated as excellent (∘), 5.0 or more and less than 7.0 was indicated as moderate (Δ), and less than 5.0 was indicated as bad (×).

### 5. Spinning workability

For the measurement of spinning workability, the number of drips (referring to a lump formed by partially fusion of the fiber strands passing through the spinneret or irregular fusion of the strands after trimming) occurring during spinning was counted, for core-sheath type composite fibers spun at the same content in each of Examples and Comparative Examples, through a drip detector, and based on the drip occurrence value in Preparation Example 1 as 100, the number of drips generated in the remaining Examples and Comparative Examples was expressed as a relative percentage.

### 6. Evaluation of dyeing rate

Dyeing process was performed for 60 minutes at 90 °C with a bath ratio of 1:50 for a dye solution containing 2% by weight of blue dye based on the weight of the core-sheath type composite fiber, and then the spectral reflectance was measured in the visible region (360 to 740 nm, 10 nm interval) of the dyed composite fiber using a color measurement system of KURABO of Japan, and then a color yield of the dye was evaluated by calculating the Total K/S value, which is an index of the amount of dyeing based on the CIE 1976 standard.

### 7. Adhesive strength

Each of the three fiber assemblies was implemented as a specimen having a width, length, and thickness of 100 mm × 20 mm × 10 mm, respectively, and the adhesive strength was measured using a universal testing machine (UTM) according to the KS M ISO 36 method.

Meanwhile, if the shape was deformed due to excessive shrinkage during heat treatment, the adhesive strength was not evaluated, and it was evaluated as 'shape deformation'.

### 8. Soft feel

Among the three types of fiber assemblies, a sensory test was performed by a group of 10 experts in the same industry on the fiber assembly prepared by heat treatment at a temperature of 140 °C, and as a result of the evaluation, if 8 or more people judged that it was soft, it was classified as excellent (⊚), 6-7 people as good (∘), 5-4 people as moderate (△), and less than 4 people as bad (×).

**[Table 1]**

| | | Exampl e 1 | Exampl e 2 | Exampl e 3 | Exampl e 4 | Exampl e 5 | Exampl e 6 | Exampl e 7 |
|---|---|---|---|---|---|---|---|---|
| Acid comp onent (mol %) | TPA | 100 | 100 | 100 | 100 | 100 | 100 | 100 |
| | IPA | 0 | 0 | 0 | 0 | 0 | 0 | 0 |
| | Total | 100 | 100 | 100 | 100 | 100 | 100 | 100 |
| Diol comp onent (mol %) | EG | 59 | 56 | 53.5 | 50 | 66 | 69.5 | 71.5 |
| | Compound of Formula 1 | 38 | 39 | 40 | 47 | 32.8 | 27.5 | 25.5 |
| | Compound of Formula 2 | 3 | 5 | 6.5 | 3 | 1.2 | 3 | 3 |
| | DEG | 0 | 0 | 0 | 0 | 0 | 0 | 0 |
| | Total | 100 | 100 | 100 | 100 | 100 | 100 | 100 |
| | Formula 1 + Formula 2 | 41 | 44 | 46.5 | 50 | 34 | 30.5 | 28.5 |
| Polye | IV | 0.628 | 0.632 | 0.632 | 0.638 | 0.643 | 0.640 | 0.645 |
| ster chip | Melting point (°C) | none | none | none | none | none | none | 187 |
| | Tg (°C) | 68 | 68 | 67 | 63 | 67 | 71 | 73 |
| | Drying time (Hr) | 44 | 44 | 44 | 48 | 44 | 28 | 24 |
| Comp osite fiber | Spinning workability (%) | 100 | 100 | 116 | 285 | 97 | 92 | 90 |
| | Storage stability of short fiber | ⊚ | ⊚ | ⊚ | ∘ | ⊚ | ⊚ | ⊚ |
| | Dyeing rate (K/S) | 16 | 17 | 17 | 15 | 14 | 12 | 11 |
| Fiber assem bly | 120°C adhesive strength (N) | 110 | 107 | 89 | 65 | 63 | 38 | non-adhesiv e |
| | 140°C adhesive strength (N) | 141 | 139 | 138 | 115 | 104 | 60 | 47 |
| | 160°C adhesive strength (N) | 184 | 179 | 176 | 173 | 139 | 91 | 76 |
| | Soft feel | ⊚ | ⊚ | ⊚ | ⊚ | ∘ | △ | △ |

**[Table 2]**

| | | Example 8 | Example 9 | Example 10 | Example 11 | Example 12 |
|---|---|---|---|---|---|---|
| Acid comp onent (mol %) | TPA | 100 | 100 | 100 | 100 | 100 |
| | IPA | 0 | 0 | 0 | 0 | 0 |
| | Total | 100 | 100 | 100 | 100 | 0 |
| Diol comp onent (mol %) | EG | 69.5 | 69.5 | 67 | 72 | 66 |
| | Compound of Formula 1 | 21 | 18.5 | 21 | 18.5 | 33.5 |
| | Compound of Formula 2 | 9.5 | 12 | 12 | 9.5 | 0.5 |
| | DEG | 0 | 0 | 0 | 0 | 0 |
| | Total | 100 | 100 | 100 | 100 | 100 |
| | Formula 1 + Formula 2 | 30.5 | 30.5 | 33 | 28 | 34 |
| Polye ster chip | IV | 0.643 | 0.640 | 0.642 | 0.643 | 0.638 |
| | Melting point (°C) | none | none | none | 187 | none |
| | Tg (°C) | 72 | 73 | 72 | 73 | 67 |
| | Drying time (Hr) | 24 | 20 | 24 | 20 | 48 |
| Comp osite fiber | Spinning workability (%) | 86 | 84 | 98 | 81 | 108 |
| | Storage stability of short fiber | ⊚ | ⊚ | ⊚ | ⊚ | ∘ |
| | Dyeing rate (%) | 13 | 11 | 13 | 11 | 15 |
| Fiber assem bly | 120°C adhesive strength (N) | 72 | 46 | 60 | non-adhesive | 43 |
| | 140°C adhesive strength (N) | 113 | 89 | 98 | 29 | 90 |
| | 160°C adhesive strength (N) | 140 | 133 | 141 | 52 | 125 |
| | Soft feel | △ | △ | △ | △ | ∘ |

**[Table 3]**

| | | Example 13 | Example 14 | Compara tive Example 1 | Compara tive Example 2 | Compara tive Example 3 | Compara tive Example 4 |
|---|---|---|---|---|---|---|---|
| Acid comp onent (mol %) | TPA | 100 | 97 | 100 | 100 | 80 | 100 |
| | IPA | 0 | 3 | 0 | 0 | 20 | 0 |
| | Total | 100 | 100 | 100 | 100 | 100 | 100 |
| Diol comp onent (mol %) | EG | 60 | 62 | 63 | 60 | 80 | 63 |
| | Compound of Formula 1 | 15 | 35 | 37 | 33 | 0 | 0 |
| | Compound of Formula 2 | 22 | 3 | 0 | 0 | 10 | 37 |
| | DEG | 0 | 0 | 0 | 7 | 10 | 0 |
| | Total | 100 | 100 | 100 | 100 | 100 | 100 |
| | Formula 1 + Formula 2 | 37 | 38 | 37 | 33 | 10 | 37 |
| Polye ster chip | IV | 0.653 | 0.635 | 0.642 | 0.640 | 0.638 | 0.638 |
| | Melting point (°C) | none | none | none | none | none | none |
| | Tg (°C) | 72 | 66 | 65 | 62 | 66 | 75 |
| | Drying time (Hr) | 28 | 44 | 52 | 52 | 56 | 20 |
| Comp osite fiber | Spinning workability (%) | 360 | 96 | 110 | 155 | 220 | 486 |
| | Storage stability of short fiber | ⊚ | ⊚ | ∘ | × | △ | ⊚ |
| | Dyeing rate (%) | 13 | 16 | 16 | 16 | 15 | 13 |
| Fiber assem bly | 120°C adhesive strength (N) | shape deform at ion | 120 | 91 | 75 | 98 | shape deform at ion |
| | 140°C adhesive strength (N) | shape deform at ion | 143 | 126 | 104 | 129 | shape deform at ion |
| | 160°C adhesive strength (N) | shape deform at ion | 164 | 152 | 136 | 151 | shape deform at ion |
| | Soft feel | - | ⊚ | ⊚ | ⊚ | ⊚ | - |

As can be seen from Tables 1 to 3, it can be confirmed that Comparative Examples had significantly prolonged drying time (Comparative Examples 1 to 3), remarkably poor spinning workability (Comparative Example 2, Comparative Example 3), very bad short fiber storage stability (Comparative Example 2, Comparative Example 3), or shape deformation in the evaluation of adhesive strength by temperature (Comparative Example 4), so it can be confirmed that all physical properties cannot be satisfied at the same time, but it can be confirmed that Examples express all physical properties at an excellent level.

Meanwhile, among Examples, in Example 15, in which the content of the compound represented by Formula 2 is higher than that of the compound represented by Formula 1, it can be confirmed that the shape is deformed in the evaluation of adhesive strength by temperature compared to other Examples, and thus it is not suitable for achieving the desired physical properties.

### <Examples 15 to 27>

It was prepared in the same manner as in Example 1, but by changing the composition ratio of the monomer for preparing the copolyester as shown in Table 4 below, a copolyester was prepared, and when spinning the composite fiber, the phosphorus-based flame retardant represented by Formula 3, which was included only in the core portion, was spun together with the copolyester chip into the sheath portion to prepare a thermal bonding fiber, as shown in Table 4, having the phosphorus-based flame retardant in the same content in both the sheath portion and the core portion.

Meanwhile, in Table 4, the content unit of the acid component and the diol component is mol%, and the remaining amount of the diol component is ethylene glycol (EG).

### <Experimental Example 2>

The following physical properties were evaluated for the thermal bonding fibers implemented according to Examples 15 to 27 or fiber assemblies using the same, and the results are shown in Table 4 below.

### 1. Strength evaluation of thermal bonding fiber

Fiber strength was measured using Textechno's FAVIMAT Fiber Test equipment, and the analysis condition was 600 mm/min at the moving speed of the jig during analysis.

### 2. Flame retardancy measurement

The flame retardancy of the fiber assembly was measured and evaluated based on the test method for flammability KS K 0585:2014: Vertical method. In this case, it was evaluated for a fiber assembly having a basis weight of 1250 g/m², which was produced by mixing and opening the thermal bonding fiber (fiber length 51 mm, fineness 4.0 de) and polyethylene terephthalate (PET) short fiber (fiber length 51 mm, fineness 7.0 de) at 5:5 weight ratio, and then heat-treating it under the conditions of 180 °C and 15 minutes.

### 3. Amount of Acetaldehyde (AA) generation of thermal bonding fiber

Based on the MS 300-55 Method, the amount of acetaldehyde generation of the thermal bonding fiber was measured.

### 4. Heat resistance

It was measured by exposing a specimen to an environment of 90 °C for about 2 hours, then fixing opposite ends in the longitudinal direction of the specimen, and then measuring the sagging width of the sagging portion, wherein the specimen has a basis weight of 330 g/m² and 100 mm × 20 mm × 10 mm in width, length and thickness, respectively, which was produced by mixing and opening the thermal bonding fiber (fiber length 51 mm, fineness 4.0 de) and polyethylene terephthalate (PET) short fiber (fiber length 51 mm, fineness 7.0 de) at 5:5 weight ratio, and then heat-treating it under the conditions of 180 °C and 15 minutes. In this case, the sagging width was measured based on the lower surfaces of the opposite ends, and the maximum value was set as the high-temperature sagging value.

**[Table 4]**

| | | Exa mple 15 | Exa mple 16 | Exa mple 17 | Exa mple 18 | Exa mple 19 | Exa mple 20 | Exa mple 21 | Exa mple 22 | Exa mple 23 | Exa mple 24 | Exa mple 25 | Exa mple 26 | Exa mple 27 |
|---|---|---|---|---|---|---|---|---|---|---|---|---|---|---|
| Aci d co mp one nt (mo 1%) | TPA | 100 | 100 | 100 | 100 | 100 | 100 | 100 | 100 | 100 | 100 | 100 | 95 | 98 |
| | IPA | 0 | 0 | 0 | 0 | 0 | 0 | 0 | 0 | 0 | 0 | 0 | 5 | 2 |
| Dio 1 co mp one nt (mo 1%) | Compoun d of Formula 1 | 35 | 35 | 35 | 35 | 35 | 35 | 30 | 32 | 37 | 40 | 42 | 30 | 33 |
| | Compoun d of Formula 2 | 1 | 1 | 1 | 1 | 1 | 1 | 1 | 1 | 1 | 1 | 1 | 1 | 1 |
| | Formula 1 + Formula 2 | 36 | 36 | 36 | 36 | 36 | 36 | 31 | 33 | 38 | 41 | 43 | 31 | 34 |
| P content (ppm) | | 6,00 0 | 4,50 0 | 5,00 0 | 5,50 0 | 6,50 0 | 7,00 0 | 6,00 0 | 6,00 0 | 6,00 0 | 6,00 0 | 6,00 0 | 6,00 0 | 6,00 0 |
| Phy sica 1 pro pert y | Fiber strength (g/d) | 4.4 | 4.4 | 4.4 | 4.3 | 4.0 | 3.4 | 4.3 | 4.3 | 4.4 | 4.2 | 4.2 | 4.4 | 4.4 |
| | high-temperatu re sagging (mm) | 12 | 11 | 12 | 12 | 11 | 11 | 9 | 11 | 15 | 20 | 40 | 12 | 11 |
| | After-flame time (second) | 0.0 | 6.2 | 5.1 | 2.9 | 0.0 | 0.0 | 0.0 | 0.0 | 0.1 | 0.0 | 0.1 | 0.0 | 0.0 |
| | Carboniza tion distance (cm) | 13.0 | 24.4 | 19.9 | 15.0 | 12.7 | 12.2 | 13.2 | 13 | 13.1 | 13.2 | 12.9 | 12.9 | 13.1 |
| | Amount of AA generation | 1551 | 1569 | 1542 | 1555 | 1531 | 1548 | 1906 | 1582 | 1210 | 1523 | 1010 | 2065 | 1580 |
| | (ppb) | | | | | | | | | | | | | |

As can be seen in Table 4, when the total content of the compound represented by Formula 1 and the compound represented by Formula 2 in the diol component is slightly less, it can be confirmed that the amount of AA generation is excessively increased as in Example 21.

In addition, when a rather large amount of the phosphorus-based flame retardant is included, there is a concern that the fiber strength may be lowered as in Example 20.

### <Experimental Example 3>

For the fiber assemblies prepared using the thermal bonding fibers according to Examples 15 to 20, the adhesive strength was evaluated by the following method, and the results are shown in Table 5 below.

It was evaluated for a fiber assembly having a basis weight of 330 g/m², which was produced by mixing and opening the thermal bonding fiber (fiber length 51 mm, fineness 4.0 de) and polyethylene terephthalate (PET) short fiber (fiber length 51 mm, fineness 7.0 de) at 5:5 weight ratio, and then heat-treating it under the conditions of 180 °C and 15 minutes.

For adhesive strength, the adhesive strength of the specimen was measured 12 times under the corresponding conditions using Instron^{®} (tensile speed 500 mm/min, Load-Cell 2 kN, Grip 5 kN) equipment, and among the result values, the average value of 10 data excluding the minimum and maximum values was calculated. In this case, the specimen was 100 mm × 20 mm × 10 mm in width, length and thickness, respectively.

**[Table 5]**

| | | Example 15 | Example 16 | Example 17 | Example 18 | Example 19 | Example 20 |
|---|---|---|---|---|---|---|---|
| Diol component | Compound of Formula 1 | 35 | 35 | 35 | 35 | 35 | 35 |
| | Compound of Formula 2 | 1 | 1 | 1 | 1 | 1 | 1 |
| | Formula 1 + Formula 2 | 36 | 36 | 36 | 36 | 36 | 36 |
| P content in composite fiber (ppm) | | 6,000 | 4,500 | 5,000 | 5,500 | 6,500 | 7,000 |
| Adhesive strength (N) | | 148 | 151 | 150 | 149 | 147 | 133 |

As can be seen from Table 5, it can be seen that in the case of Example 20, in which a rather large amount of phosphorus-based flame retardant was provided at the sheath portion of the thermal bonding fiber, the adhesive strength was lowered.

Although exemplary embodiments of the present invention have been described above, the spirit of the present invention is not limited to the embodiments set forth herein. Those of ordinary skill in the art who understand the spirit of the present invention may easily propose other embodiments through supplement, change, removal, addition, etc. of elements within the same spirit, but the embodiments will be also within the scope of the present invention.

## Claims

1. A thermal bonding fiber, comprising:
a core portion comprising a polyester-based component and a phosphorus-based flame retardant; and
a sheath portion comprising a copolyester obtained by polycondensation of an acid component comprising terephthalic acid and an esterified compound produced by the reaction of ethylene glycol with a diol component comprising a compound represented by Formula 1 and a compound represented by Formula 2 below are reacted, and surrounding the core portion:

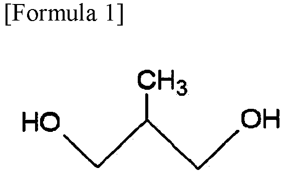

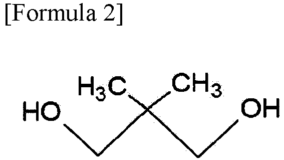

2. The thermal bonding fiber of claim 1, wherein the total content of the compound represented by Formula 1 and the compound represented by Formula 2 is comprised in an amount of 30 to 45 mol% of the diol component.

3. The thermal bonding fiber of claim 1, wherein in the diol component, the compound represented by Formula 1 is comprised in a larger content than the compound represented by Formula 2.

4. The thermal bonding fiber of claim 1, wherein in the diol component, the compound represented by Formula 1 is comprised in an amount of 20 to 40 mol%, and the compound represented by Formula 2 is comprised in an amount of 0.8 to 10 mol%.

5. The thermal bonding fiber of claim 1, wherein the core portion comprises a phosphorus-based flame retardant represented by Formula 3 below in an amount of 5500 ppm to 6500 ppm based on the phosphorus content: 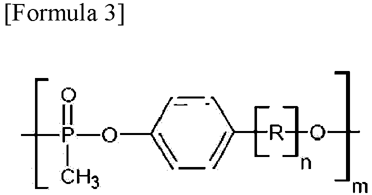 wherein in Formula 3, R is an alkylene group having 1 to 5 carbons, n is an integer of 1 to 20, and m is an integer of 1 to 80.

6. The thermal bonding fiber of claim 5, wherein the sheath portion of the thermal bonding fiber further comprises a phosphorus-based flame retardant represented by the Formula 3.

7. A fiber assembly for automotive interior and exterior materials, comprising:
a thermal bonding fiber according to any one of claims 1 to 6; and
a polyester-based support fiber having a melting point higher than 250 °C.

8. The fiber assembly for automotive interior and exterior materials of claim 7, wherein the thermal bonding fiber and the support fiber are comprised in a weight ratio of 70:30 to 30:70.

9. The fiber assembly for automotive interior and exterior materials of claim 7, wherein the fiber assembly for automotive interior and exterior materials satisfies conditions (1) to (3) below:
(1) 0 to 15 cm of carbonization distance
(2) 1600 ppb or less amount of acetaldehyde (AA) generation in accordance with the MS 300-55 method in the thermal bonding fiber
(3) 20 mm or less high-temperature sagging.

10. An automotive interior and exterior material comprising a fiber assembly for automotive interior and exterior materials according to claim 7.
